(19) Europäisches Patentamt
European Patent Office
Office européen des brevets

(11) **EP 3 121 408 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(21) Anmeldenummer: **16180777.1**

(22) Anmeldetag: **22.07.2016**

(51) Int Cl.:
*F02B 39/10* *(2006.01)*  *F02D 21/08* *(2006.01)*
*F02D 23/00* *(2006.01)*  *F02D 41/00* *(2006.01)*
*F02D 41/10* *(2006.01)*  *F02B 33/40* *(2006.01)*
*F02B 37/24* *(2006.01)*  *F02M 26/05* *(2016.01)*
*F02M 26/06* *(2016.01)*

(54) **STEUERN EINER VERBRENNUNGSKRAFTMASCHINE IM TRANSIENTEN BETRIEB**

CONTROL OF A COMBUSTION ENGINE IN TRANSIENT OPERATION

COMMANDE D'UN MOTEUR A COMBUSTION INTERNE EN FONCTIONNEMENT TRANSITOIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.07.2015 DE 102015214034**

(43) Veröffentlichungstag der Anmeldung:
**25.01.2017 Patentblatt 2017/04**

(73) Patentinhaber: **Volkswagen Aktiengesellschaft 38440 Wolfsburg (DE)**

(72) Erfinder:
• **REBOHL, Thorsten 38527 Meine (DE)**
• **CASSEBAUM, Oliver 38448 Wolfsburg (DE)**

(74) Vertreter: **MFG Patentanwälte Meyer-Wildhagen Meggle-Freund Gerhard PartG mbB Amalienstraße 62 80799 München (DE)**

(56) Entgegenhaltungen:
**EP-A1- 2 884 078        EP-A2- 1 180 589**
**DE-A1-102014 216 496   GB-A- 2 480 240**
**US-A1- 2004 061 290     US-A1- 2015 176 536**

**Beschreibung**

Die vorliegende Erfindung betrifft ein Verfahren und ein Motorsteuergerät zum Steuern einer Verbrennungskraftmaschine. Ferner ist ein Fahrzeug bereitgestellt, was die Verbrennungskraftmaschine und das Motorsteuergerät zum Steuern der Verbrennungskraftmaschine aufweist.

Ein transienter Motorbetrieb kann als ein Betrieb einer Verbrennungskraftmaschine (z. B. Dieselmotor oder Ottomotor) aufgefasst werden, in welchem sich ein von der Verbrennungskraftmaschine angefordertes Drehmoment mit der Zeit ändert, insbesondere erhöht. Es ist beobachtet worden, dass ein großer Teil der Partikel, wie etwa Ruß, und ein großer Teil der Stickoxide ($NO_x$) im transienten Motorbetrieb entsteht. Um die Ruß-Partikel- und $NO_x$-Emissionen zu begrenzen, wird in der Regel die eingespritzte Kraftstoffmenge in Abhängigkeit des angesaugten Luft-Abgasgemisches begrenzt (Rauchgrenze).

Bei einer Abgasrückführung wird ein Teil des aus einem Verbrennungsraum der Verbrennungskraftmaschine ausgegebenen Abgases wieder zur Füllung des Verbrennungsraums für die nächste Verbrennung zurückgeführt. Damit können grundsätzlich $NO_x$-Emissionen verringert werden. Herkömmlicherweise wird im transienten Fall, insbesondere bei einer Erhöhung eines angeforderten Solldrehmoments, die Abgasrückführungsrate reduziert, um einen schnelleren Füllungsaufbau bzw. eine schnellere Luftfüllung in einen Verbrennungsraum zu ermöglichen und dadurch das Motoransprechverhalten auf das angeforderte erhöhte Drehmoment zu verbessern. Als Folge der verringerten Abgasrückführung kann es im Stand der Technik jedoch zu einer Erhöhung der $NO_x$-Emissionen kommen.

Die Offenlegungsschrift DE 10 2009 032 659 A1 offenbart ein Verfahren zur Begrenzung eines Emissionsverhaltens während eines transienten Betriebs eines Dieselmotors mit einer $NO_x$-Begrenzung wie auch einer Rußbegrenzung unter Berücksichtigung einer Abgasrückführung, wobei auf Basis einer Drehmomentanforderung eine erforderliche Kraftstoffmenge bestimmt wird, auf Basis der erforderlichen Kraftstoffmenge ein erforderlicher Luftmassen- und Abgasrückführungsstrom ermittelt wird, ein jeweiliger $NO_x$- sowie $O_2$-Sollwert an die erforderliche Kraftstoffmenge zur Vermeidung eines unerwünschten Drehmomentgradienten angepasst wird und daraus eine einzuspritzende Kraftstoffmenge und eine Einspritzform bestimmt wird. Die Abgasrückführung wird so eingestellt, dass eine $NO_x$-Begrenzung bzw. eine Rußbegrenzung eingehalten wird.

Die Offenlegungsschrift DE 10 2012 222 107 A1 offenbart ein Verfahren zum Steuern einer Abgasrückführung, wobei eine vom Verbrennungsmotor abzugebende Sollleistung bestimmt wird und ein durch eine Abgasrückführung geführter Abgasstrom basierend auf der Sollleistung begrenzt wird. Die Begrenzung des Abgasstroms durch die Abgasrückführung kann von einem Sollabgasstrom durch eine Turbine eines Turboladers abhängig sein.

Die Offenlegungsschrift US2015176536 A1 offenbart ein Verfahren zum Steuern einer Abgasrückführung mit einem elektrischen Verdichter.

Die herkömmlichen Verfahren und Systeme können verschiedene Nachteile aufweisen, insbesondere hinsichtlich hoher $NO_x$- und/oder Partikelemissionen.

Eine Aufgabe der vorliegenden Erfindung ist es somit, ein Verfahren und ein Motorsteuergerät zu schaffen, welches die oben genannten Probleme zumindest teilweise überwindet. Insbesondere ist es eine Aufgabe der vorliegenden Erfindung, ein Verfahren und ein Motorsteuergerät zu schaffen, welche einen Betrieb einer Verbrennungskraftmaschine in einem transienten Betriebsbereich zuverlässig derart ermöglichen, dass Schadstoffemissionen begrenzt bzw. vermindert werden, jedoch gleichzeitig ein rasches und zuverlässiges Ansprechverhalten gewährleistet wird.

Die Aufgabe wird durch ein Verfahren zum Steuern einer Verbrennungskraftmaschine bzw. durch ein Motorsteuergerät zum Steuern einer Verbrennungskraftmaschine gemäß den unabhängigen Ansprüchen gelöst. Die abhängigen Ansprüche spezifizieren vorteilhafte Ausführungsformen der vorliegenden Erfindung.

Gemäß einem ersten Aspekt der vorliegenden Erfindung ist ein Verfahren zum Steuern einer Verbrennungskraftmaschine bereitgestellt, wobei das Verfahren aufweist:

Detektieren eines Erhöhens eines von der Verbrennungskraftmaschine bereitzustellenden Solldrehmomentes auf ein erhöhtes Solldrehmoment;
Erhöhen einer Dichte von Gas auf eine erhöhte Dichte;
Zuführen des Gases der erhöhten Dichte in einen Verbrennungsraum der Verbrennungskraftmaschine; und
Rückführen von aus dem Verbrennungsraum ausgegebenem Abgas in den Verbrennungsraum mit einer gegenüber einer Referenzrate, die im stationären Betrieb bei dem erhöhtem Solldrehmoment angewendet wird, erhöhten Abgasrückführungsrate.

Die Verbrennungskraftmaschine kann z. B. ein Dieselmotor oder ein Ottomotor sein. Das Verfahren kann von einem Motorsteuergerät ausgeführt werden, welches sich z. B. in einem Fahrzeug, das die Verbrennungskraftmaschine umfasst, befindet. Das Fahrzeug kann ferner einen Elektroantriebsmotor beinhalten, wodurch ein Hybridfahrzeug geschaffen sein kann.

Die Detektion der Sollmomentenerhöhung kann innerhalb eines Zeitraums geschehen, z. B. in einem Zeitraum zwischen 0,1 und 10 Sekunden. Z. B. könnte das Detektieren des Erhöhens des der Solldrehmoments ein Erkennen umfassen, dass das Solldrehmoment innerhalb des Zeitraumes von einem niedrigen Solldrehmoment auf das erhöhte Solldrehmoment geändert wurde, wobei das erhöhte Solldrehmoment z. B. das niedrige Solldrehmoment um 20 % bis 500 % übersteigen kann. Das Detektieren des Erhöhens des Solldrehmoments kann z. B. ein Detektieren einer Änderung einer Gaspedalstellungsänderung umfassen. Die Gaspedalstellung kann z. B. durch ein elektrisches oder optisches oder mechanisches Signal oder auch ein Funksignal an ein Motorsteuergerät übermittelt werden, welches das Verfahren zur Steuerung der Verbrennungskraftmaschine durchführt. Das Detektieren des Erhöhens des Solldrehmoments kann zunächst umfassen, dass eine Änderung des Solldrehmoments als solches erkannt, bestimmt und insbesondere quantifiziert wird. Ferner kann das Detektieren des Erhöhens des Solldrehmoments auch umfassen, den Wert des erhöhten Solldrehmoments zu bestimmen. Das Detektieren des Erhöhens des Solldrehmoments (innerhalb eines bestimmten Zeitraums um einen bestimmten Betrag, z. B. 10 % bis 1000 % innerhalb von 0,1 Sekunde bis 5 Sekunden) kann anzeigen, dass die Verbrennungskraftmaschine in einem transienten Betriebsmodus arbeitet. Das Erhöhen des Solldrehmoments von dem niedrigen Solldrehmoment auf das erhöhte Solldrehmoment kann z. B. sprunghaft erfolgen, kann ein lineares Ansteigen umfassen oder kann gemäß einer gekrümmten Kurve bzw. einer Kurve mit mehreren gekrümmten und/oder geraden Abschnitten erfolgen.

Nachdem, bzw. sobald das Erhöhen des Solldrehmomentes erkannt ist, kann das Erhöhen der Dichte von dem Gas vor dem Zylindereinlass durchgeführt werden, wobei das Gas Frischluft oder ein Gemisch aus Frischluft und Abgas enthalten kann. Das Erhöhen der Dichte des Gases kann z. B. durch einen Verdichter, insbesondere einen elektrischen Verdichter durchgeführt werden. Dabei kann Abgas der Frischluft stromaufwärts oder stromabwärts des Verdichters zugeführt werden. Die Frischluft und/oder das Abgas kann bereits vorverdichtet sein, z. B. durch einen Turbolader, oder kann nicht vorverdichtet sein, das heißt einen Umgebungsdruck aufweisen oder einen Druck aufweisen, welcher in Abhängigkeit von der Temperatur und des Umgebungsdrucks gegeben ist. Vor dem Detektieren des Erhöhens des Solldrehmomentes kann das Gas eine niedrige Dichte gehabt haben, welche geringer ist als die erhöhte Dichte. Das Erhöhen der Dichte des Gases kann mittels einer elektrischen Komponente durchgeführt werden, ohne eine zusätzliche Leistungsabgabe der Verbrennungskraftmaschine selbst zu erfordern, das heißt z. B. ohne einen Turbolader zur Erhöhung der Dichte zu verwenden. Damit kann die Leistung der Verbrennungskraftmaschine in vorteilhafter Weise für die Realisierung des angeforderten erhöhten Solldrehmoments eingesetzt werden.

Durch das Erhöhen der Dichte des Gases, welches dem Verbrennungsraum der Verbrennungskraftmaschine zugeführt wird, kann ein tatsächliches von der Verbrennungskraftmaschine bereitgestelltes Istdrehmoment schneller dem angeforderten erhöhten Solldrehmoment entsprechen oder gleichen bzw. angenähert werden. Insbesondere kann durch eine Erhöhung der Dichte des Gases eine schnellere Befüllung des Verbrennungsraums mit dem Gas erfolgen, womit auch eine Verbrennung hinsichtlich seiner Leistungsabgabe verbessert werden kann.

Das Verfahren umfasst ferner eine Abgasrückführung mit gegenüber einer Referenzrate (das heißt Abgasrückführungsreferenzrate), die im stationären Betrieb bei dem erhöhten Solldrehmoment angewendet wird, erhöhten Abgasrückführungsrate. Dazu kann z.B. ein Abgasrückführungsventil entsprechend angesteuert werden. Die erhöhte Abgasrückführungsrate kann z. B. zwischen 5 % und 300 % höher sein als die Abgasrückführungsreferenzrate.

Als Systemreaktion auf eine Anforderung eines erhöhten Solldrehmoments können ferner die Variable-Turbinen-Geometrie-(VTG)-Schaufeln zugezogen werden oder in der Stellung belassen werden. Ferner kann ein eBooster (elektrischer Verdichter) angetrieben werden. Somit steigt die Ist-Füllung des Verbrennungsraumes mit Gas (Luft oder Luft-Abgas-Gemisch) schneller an, so dass die Einspritzmenge im Vergleich zur benötigten Einspritzmenge nicht so stark reduziert werden muss wie im konventionellen Fall. Somit kann eine Verbesserung des Motoransprechverhaltens ("Performancegewinn") erreicht werden.

Ferner steigt die Ist-Füllung des Verbrennungsraums mit Gas (Luft oder Luft-Abgas-Gemisch) schneller an, so dass die Abgasrückführungsrate nicht mehr reduziert werden muss (im Vergleich zum herkömmlichen Fall). Damit kann eine Reduktion der NOx-Emissionen erreicht werden.

Die Abgasrückführungsrate kann sogar im Vergleich zum konventionellen Fall erhöht werden. Wie stark die Abgasrückführungsrate erhöht werden kann, kann vom Verbrennungsluftverhältnis $\lambda$ abhängen (und damit von der Verbesserung des Füllungsaufbaus und der Erhöhung der Einspritzmenge)

$$\lambda = \frac{m_{L.tats}}{m_{L.st}}$$

Dabei ist $m_{L.tats} = m_{L.tats.ges(20\%\,O2)} - m_{L.tats.EGR(\sim ohne\,O2)}$

Die Verbrennungsmotorsteuerung kann also auch einen Teil dieses "Performancegewinns" aufgeben, indem eine im Vergleich zur Referenz erhöhte EGR-Rate gewünscht wird. Die Folge ist eine Reduktion der NOx-Emissionen bei zusätzlich leicht verringertem Partikelausstoß. Ein übergeordneter Optimierer oder Schalter kann diese Entscheidung treffen.

Das Erhöhen der Dichte des Gases und die Rückführung des Abgases mit der erhöhten Abgasrückführungsrate kann während eines Zeitintervalls zwischen einem Beginn des Erhöhens auf das erhöhte Solldrehmoment von einem niedrigen Solldrehmoment und bis bzw. auch noch nach Ende des Erhöhens des Solldrehmoments durchgeführt werden. Dabei kann das Zeitintervall z. B. zwischen 0,1 Sekunde und 5 Sekunden betragen. Damit kann genügend Zeit bereitgestellt sein, um tatsächlich das angeforderte Solldrehmoment von der Verbrennungskraftmaschine möglichst schnell zu erzeugen. In anderen Ausführungsformen ist das Zeitintervall kürzer oder länger. Wenn z. B. während des Zeitintervalls ein Solldrehmoment weiter ansteigt kann das Zeitintervall verlängert werden, falls das Solldrehmoment verringert wird, kann das Erhöhen der Dichte des Gases und/oder das Erhöhen der Abgasrückführung abgebrochen werden.

Die Abgasrückführungsrate kann durch einen Zeitverlauf (z. B. Kurve in einem Koordinatensystem, in dem die Abgasrückführungsrate gegen die Zeit aufgetragen ist) während des Zeitintervalls gekennzeichnet sein. Innerhalb des Zeitintervalls kann die Abgasrückführungsrate zunächst ansteigen, ein Maximum erreichen und danach auf die Abgasrückführungsreferenzrate abfallen. Die Kurve bzw. der Zeitverlauf der Abgasrückführungsrate (nach Erhöhen des Solldrehmoments, insbesondere nach einem Solldrehmomentsprung) kann z. B. die Form einer Glockenkurve haben. Die Abgasrückführungsrate kann sich z. B. entsprechend bzw. synchron mit einer Erhöhung der Dichte des Gases bzw. synchron mit einer Füllmenge des Gases in dem Verbrennungsraum ändern. Damit kann ein angefordertes Solldrehmoment schnell erreicht werden, während Abgasemissionen, insbesondere Stickoxidemissionen, begrenzt werden können.

Nach Verstreichen des Zeitintervalls kann das Erhöhen der Dichte des Gases beendet werden, indem z.B. ein elektrischer Verdichter bei geringerer Verdichtungsleistung betrieben wird oder abgeschaltet wird. Somit kann bei einem Übergang von einem transienten Betrieb zu einem stationären Betrieb auf das Erhöhen der Dichte des Gases verzichtet werden, insbesondere auf einen Betrieb eines elektrischen Verdichters verzichtet werden. Damit kann Energie eingespart werden. Nichtsdestotrotz kann auch in einem stationären Betrieb das Gas einer Verbrennungskammer der Verbrennungskraftmaschine vorverdichtet zugeführt werden, z. B. in dem es mittels eines Turboladers vorverdichtet wird. Der elektrische Verdichter, falls vorhanden, kann in anderen Betriebsarten hinzugeschaltet werden.

Die Abgasrückführungsrate kann zeitlich synchron zu einer Füllungsmenge des in den Verbrennungsraum zugeführten Gases verändert werden. Dazu kann z. B. die Füllungsmenge des in den Verbrennungsraum zugeführten Gases über Messsysteme oder Modelle bestimmt und über die Abgasrückführungsrate die Zusammensetzung der Füllung aus Anteilen von Frischluft und zurückgeführtem Abgas eingestellt werden. Letzteres kann z.B. durch Ansteuern eines oder mehrerer Abgasrückführungsventile oder anderer Vorrichtungen wie z.B. Pumpen erfolgen. Die Abgasrückführungsrate kann als ein Verhältnis aus tatsächlich zurückgeführtem Abgasmassenstrom zu Gesamtgasmassenstrom, der dem Verbrennungsraum zugeführt wird, definiert sein. Andere Definitionen sind möglich.

Die erhöhte Abgasrückführungsrate kann so gewählt sein (bzw. ein zeitlicher Verlauf der Abgasrückführungsrate kann so gewählt sein), dass die (momentan) rückgeführte Abgasmenge einem (momentanen) Füllungsanteil des in den Verbrennungsraum zugeführten Gases entspricht (bzw. gleicht), welcher Füllungsanteil aufgrund der erhöhten Dichte des Gases in dem Verbrennungsraum erzeugt ist, wobei der Füllungsanteil zwischen 30 % und 100 % liegen kann. Aufgrund der Erhöhung der Dichte des Gases kann eine gegenüber einer Referenzfüllmenge erhöhte Füllmenge des Gases in der Verbrennungskammer vorliegen. Die Differenz aus der erhöhten Füllungsmenge und der Referenzfüllungsmenge kann einer maximalen Abgasrückführungsmenge entsprechen, die während des Verfahrens der Verbrennungskammer zurückgeführt wird. Mit dieser maximalen Abgasrückführungsmenge kann eine Minimierung der $NO_x$-Emission erreicht werden. Nachteilig kann jedoch sein, dass ein Opazitätsdurchsatz (eine Abgastrübung aufgrund von Partikeln, insbesondere Ruß, und der Abgasmassenstrom) ansteigt und auch ein Lambda-Wert zu weit absinkt. Aufgrund dieser nachteiligen Effekte kann die Abgasrückführungsmenge nur als ein Anteil zwischen 30 % und 100 % der aufgrund der Erhöhung der Dichte bewirkten Erhöhung der Füllungsmenge der Verbrennungskammer eingestellt bzw. gewählt werden. Gemäß vorgegebenen Emissionsgrenzen bzw. Emissionsanforderungen kann ein geeigneter Kompromiss zur Begrenzung sowohl der $NO_x$- als auch der Partikel-Emissionen bzw. des Lambda-Wertes aufgefunden werden.

Die erhöhte Abgasrückführungsrate kann so gewählt sein, dass ein Lambda-Wert nicht unterhalb eines Referenz-Lambda-Wertes fällt. Die Abgasrückführungsrate kann auch hinsichtlich ihres zeitlichen Verlaufes derart gewählt werden, dass während der Verfahrensdurchführung niemals der Lambda-Wert unterhalb eines Referenz-Lambda-Wertes fällt. Der Referenz-Lambda-Wert kann bei einem Dieselmotor z. B. zwischen 1,0 und 1,3 liegen. Wird das Verfahren mit einem Ottomotor durchgeführt, so kann der Lambda-Wert im Wesentlichen bei 1,0 eingestellt werden, so dass der Referenz-Lambda-Wert bei 1,0 liegen kann. Der Lambda-Wert kann als Quotient aus tatsächlich vorhandener der Verbrennungskammer zugeführter Luftmenge und für eine vollständige Verbrennung erforderlicher Luftmenge definiert sein.

Das Erhöhen der Dichte des Gases im Brennraum der Verbrennungskraftmaschine kann mittels eines elektrisch unterstützen Abgasturboladers, und/oder mittels eines elektrisch angetriebenen Verdichters erfolgen, dem Frischluft oder ein Gemisch aus Frischluft und Abgas zugeführt wird. Damit können herkömmlich verfügbare Ausrüstungen bzw. Baugruppen verwendet werden, so dass das Verfahren in einfacher Weise implementiert werden kann.

Das Verfahren kann ferner ein Zuführen von aus dem Verbrennungsraum der Verbrennungskraftmaschine abgegebenen Abgas in einen Turbolader (der elektrisch unterstützt sein kann oder nicht) umfassen, sowie ein Verändern einer Turbolader-Turbinengeometrie des Turboladers derart, dass nach dem Erhöhen des Solldrehmomentes mehr Enthalpie-Abgabe des Abgases an eine Turbine des Turboladers erfolgt als vor dem Erhöhen des Solldrehmomentes. Damit kann eine noch höhere Verdichtung des Gases erreicht werden. Die Turbolader-Turbinengeometrie des Turboladers kann bzw. braucht in gewissen Ausführungsformen nur geringfügig geändert werden, um die Leistungsabgabe der Verbrennungskraftmaschine an den Turbolader während des transienten Betriebes nur leicht zu erhöhen um somit das angeforderte Solldrehmoment von der Verbrennungskraftmaschine schnell liefern zu können. In anderen Ausführungsformen braucht die Turbolader-Turbinengeometrie des Turboladers nicht verändert zu werden oder es kann auch ein Turbolader ohne eine veränderbare Turbinengeometrie eingesetzt sein. In noch anderen Ausführungsformen kann auf einen Turbolader verzichtet werden.

Gemäß einem weiteren Aspekt der vorliegenden Erfindung ist ein Motorsteuergerät zum Steuern einer Verbrennungskraftmaschine bereitgestellt, welches ausgebildet ist, ein Verfahren zum Steuern einer Verbrennungskraftmaschine wie oben beschrieben auszuführen.

Ausführungsformen der vorliegenden Erfindung werden nun mit Bezug auf die beigefügten Zeichnungen erläutert. Die Erfindung ist nicht auf die illustrierten oder beschriebenen Ausführungsformen begrenzt.

Fig. 1 illustriert schematisch einen Teil eines Fahrzeugs mit einer Verbrennungskraftmaschine und einem Motorsteuergerät gemäß einer Ausführungsform der vorliegenden Erfindung;

Fig. 2 illustriert schematisch ein Verfahren zum Steuern einer Verbrennungskraftmaschine gemäß einer Ausführungsform der vorliegenden Erfindung;

Fig. 3 illustriert Säulendiagramme zur Erläuterung von Verfahren zum Steuern einer Verbrennungskraftmaschine gemäß Ausführungsformen der vorliegenden Erfindung; und

Fig. 4 illustriert Graphen zur Erläuterung von Verfahren zum Steuern einer Verbrennungskraftmaschine gemäß Ausführungsformen der vorliegenden Erfindung.

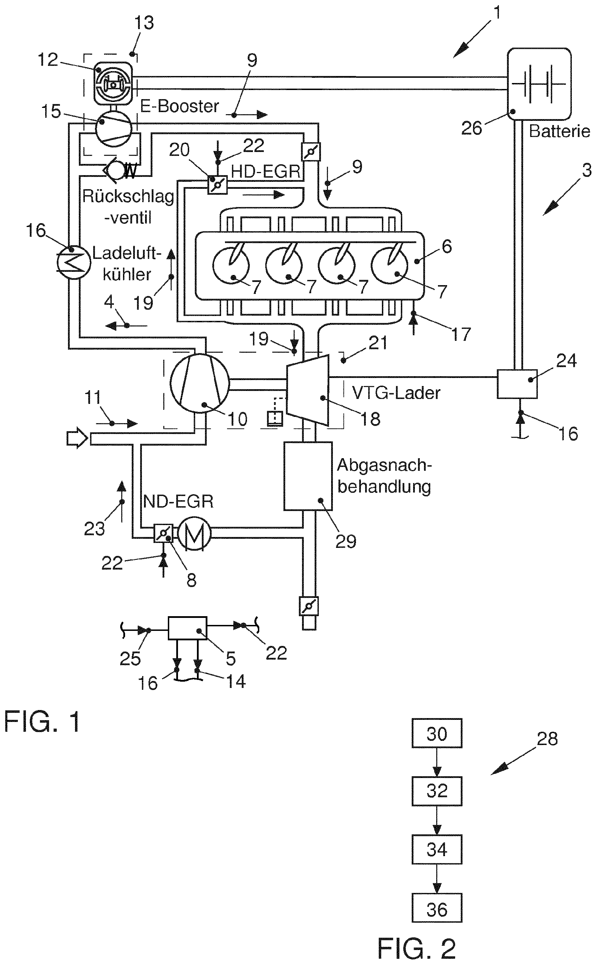

Fig. 1 illustriert schematisch einen Teil eines Fahrzeugs 1 welches eine Verbrennungskraftmaschine 3 und ein Motorsteuergerät 5 gemäß einer Ausführungsform der vorliegenden Erfindung umfasst. Die Verbrennungskraftmaschine 3 umfasst einen Zylinderblock 6 mit Zylindern 7, denen in einem Verbrennungsraum der Verbrennungskraftmaschine 3 ein Gas 9 (Frischluft oder ein Gemisch aus Frischluft und Abgas) zugeführt wird. Dazu wird Frischluft 11 (optional nach Verdichtung durch einen Turbolader 21, der eine Abgasturbine 18 und einen von der Abgasturbine angetriebenen Verdichter 10 umfasst) einem elektrischen Verdichter 13 (mit Elektromotor 12 und Verdichter 15) zugeführt, welcher die Frischluft, optional nach Kühlung durch einen Ladeluftkühler 16, (optional zusammen mit Abgas 19) verdichtet, das heißt seine Dichte erhöht. Das dem Zylinderblock 6 zugeführte Gas 9 wird mit über Zuleitungen 17 zugeführtem Kraftstoff vermischt und über den Verbrennungsprozess des Kraftstoffes innerhalb von Verbrennungsräumen der Zylinder 7 thermodynamisch umgesetzt, sodass über die Kurbelwelle des Motors und des Getriebes das Fahrzeug 1 angetrieben wird.

Bei der Verbrennung entstehendes Abgas 19 wird über ein nicht illustriertes Auslassventil aus dem Zylinderblock 6 herausgeführt und dem Turbolader 21, insbesondere der Abgasturbine 18 des Turboladers 21 zugeführt. Der Turbolader 21 ist optional und ist nur schematisch dargestellt. Die Abgasturbine 18 innerhalb des Turboladers 21 wird durch das aus den Zylindern 7 ausströmende Abgas 19 in Rotation versetzt und treibt einen Verdichter 10 an, welcher Frischluft 11 (optional mit rückgeführtem Abgas 23 gemischt) komprimiert, um sie als komprimierte Frischluft bzw. Gas 4 dem elektrischen Verdichter 13 zuzuführen. Der Turbolader 21 kann gemäß Ausführungsformen der Erfindung ein elektrisch unterstützter Turbolader 21 sein, der zur Unterstützung einen von einer Batterie 26 angetriebenen Elektromotor 24 umfasst und über Steuersignale 16 von dem Motorsteuergerät 5 gesteuert wird. Stromabwärts des Turboladers wird das Abgas durch eine Abgasnachbehandlung 29 (z.B. Partikelfilter und/oder Katalysator) geführt.

Einige Ausführungsformen umfassen lediglich einen elektrischen Verdichter 13 zum Erhöhen der Dichte von Gas aber keinen elektrisch mit Motor 24 unterstützten Turbolader, sondern z.B. einen nicht elektrisch unterstützen Turbolader oder gar keinen Turbolader. Andere Ausführungsformen umfassen keinen elektrischen Verdichter 13 und nur einen elektrisch mit Motor 24 unterstützten Turbolader zum Erhöhen der Dichte von Gas. Noch andere Ausführungsformen umfassen sowohl einen elektrischen Verdichter 13 als auch einen elektrisch mit Motor 24 unterstützten Turbolader zum Erhöhen der Dichte von Gas.

Das Motorsteuergerät 5 ist ausgebildet, ein Verfahren 28 zum Steuern einer Verbrennungskraftmaschine gemäß einer Ausführungsform der vorliegenden Erfindung durchzuführen, welches in Fig. 2 schematisch illustriert ist. Über ein Detektionssignal 25, z. B. ein elektrisches, optisches bzw. mechanisches Signal detektiert das Motorsteuergerät 5 in einem Verfahrensschritt 30 ein Erhöhen eines von der Verbrennungskraftmaschine 3 bereitzustellenden Solldrehmoments auf ein erhöhtes Solldrehmoment. In dem Verfahrensschritt 32 erfolgt ein Erhöhen einer Dichte von Gas (z. B. 11 und/oder 23 und/oder 4) auf eine erhöhte Dichte. In dem Verfahrensschritt 34 wird das Gas 9 (oder auch 4) der erhöhten Dichte in einen Verbrennungsraum der Verbrennungskraftmaschine 3 zugeführt. In einem Verfahrensschritt 36 wird ein Teil 23 des aus dem Verbrennungsraum ausgegebenes Abgases 19 in den Verbrennungsraum mit einer gegenüber einer Referenzrate, die im stationären Betrieb bei dem erhöhten Solldrehmoment angewendet wird, erhöhten Abgasrückführungsrate zurückgeführt, z.B. als Abgas 23.

Zur Rückführung des Abgases 23 bzw. zur Rückführung zumindest eines Teils des Abgases 19 umfasst die Verbrennungskraftmaschine 3 ein Hochdruck(HD)-Abgasrückführungsventil 20, welches die rückzuführende Menge des aus dem Verbrennungsraum herausgelassenen Abgases 19 regelt und dessen Stellung mittels des Motorsteuergeräts 5 z. B. durch ein Steuersignal 22 gesteuert wird. Zur Rückführung des Abgases 23 umfasst die Verbrennungskraftmaschine 3 ein Niederdruck (ND)-Abgasrückführungsventil 8, welches die rückzuführende Menge des Abgases 19 nach Durchlaufen der Abgasnachbehandlung 29 regelt und dessen Stellung mittels des Motorsteuergeräts 5 z. B. durch ein Steuersignal 22 gesteuert wird. Das Motorsteuergerät 5 steuert also die Stellungen des (ND)-Abgasrückführungsventils 8 und des Hochdruck (HD)-Abgasrückführungsventil 20, um eine Abgasrückführungsrate einzustellen.

Das Motorsteuergerät 5 steuert auch durch ein Steuersignal 14 den elektrischen Verdichter 13 und optional durch ein Steuersignal 16 den elektrisch unterstützten Turbolader 21, um ein Steuerverfahren gemäß einer Ausführungsform der vorliegenden Erfindung durchzuführen.

Durch den verbesserten (insbesondere schnelleren) Füllungsaufbau (des Gases 9 in die Verbrennungsräume der Zylinder 7) mittels des elektrischen Verdichters 13 (und/oder des elektrisch unterstützten Turboladers 21) kann das vom Fahrer gewünschte Sollmoment (repräsentiert durch das Detektionssignal 25) schneller von der Verbrennungskraftmaschine 3 erreicht, d.h. tatsächlich (an Antriebsräder) geliefert werden. Gemäß einer Ausführungsform der vorliegenden Erfindung kann auf einen Teil dieses Performancegewinns verzichtet werden, indem eine im Vergleich zu einer Referenzrate erhöhte Abgasrückführungsrate von dem Motorsteuergerät 5 im transienten Betrieb, das heißt insbesondere bei einer Erhöhung eines angeforderten Solldrehmoments, eingestellt wird, insbesondere durch Ansteuern des Abgasrückführungsventils 20. Als Folge kann die $NO_x$-Emission bei zusätzlich leicht verringertem Partikelausstoß reduziert werden.

Gemäß Ausführungsformen der vorliegenden Erfindung kann während dynamischer Lastanforderungen (das heißt insbesondere bei Erhöhung eines angeforderten Solldrehmoments) ein elektrisch angetriebener Verdichter, z. B. der Verdichter 13, und/oder der elektrisch unterstütze Turbolader 21, hinzugeschaltet bzw.

eingeschaltet werden und dabei kann die Abgasrückführungsrate im Vergleich zu einer Abgasrückführungsreferenz erhöht werden. Es kann ein elektrisch unterstützter Turbolader, z. B. der Turbolader 21, anstatt eines rein elektrisch angetriebenen Verdichters 13 zum Einsatz kommen. Dabei muss jedoch die eingesetzte Komponente in der Lage sein, eine Beschleunigung eines Füllungsaufbaus zu bewirken bzw. eine Füllung des Verbrennungsraums mit Gas zu beschleunigen.

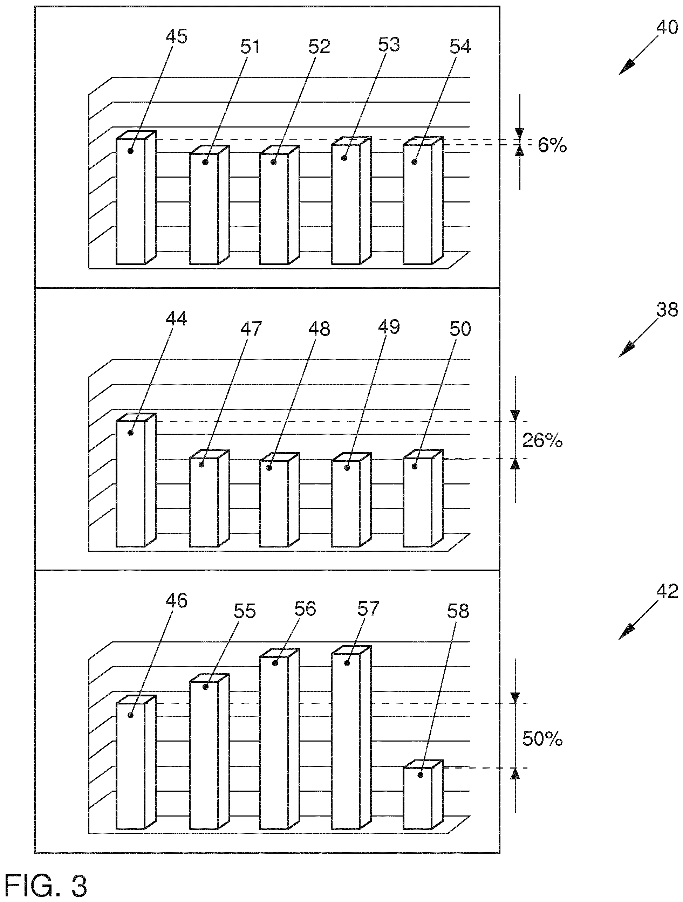

Fig. 3 illustriert Säulendiagramme basierend auf Messungen im Dynamikbetrieb, bei denen die Verbrennungskraftmaschine 3 gemäß Ausführungsformen der vorliegenden Erfindung angesteuert wurde. Dabei lag der Untersuchungsfokus auf einem Emissionsreduktionspotential in der Dynamik, das heißt transienter Betrieb, durch schnelleren Ladedruckaufbau bei gleichem indizierten Momentenaufbau. Dabei wurde ein Solldrehmomentsprung, das heißt ein Sprung in dem angeforderten Solldrehmoment, beispielhaft von 50 Nm auf 210 Nm vorgegeben. Die Verbrennungskraftmaschine wurde bei 1500 Umdrehungen pro Minute betrieben. Ferner wurde eine Führung der Luft-Abgassystem-Stellgrößen in der Dynamik durchgeführt, wobei die VTG-Position (variable Turbinengeometrie) des Turboladers 21, die Boost-Dauer des elektrischen Verdichters (z. B. elektrischer Verdichter 13, der in Fig. 1 illustriert ist), und die Abgasrückführungsrate (z.B. über das Abgasrückführungsventil 20) variiert wurden.

Die Bewertung der Versuche wurde zur Bestimmung des Potentials der Reduktion von emittierten Partikeln durchgeführt. Ferner wurde ein zusätzliches Potential der Reduktion von Stickoxiden durch eine Abgasrückführung in der Dynamik bewertet.

Fig. 3 illustriert Säulendiagramme 38, 40 und 42, welche die Ladungswechselverluste, den Opazitätsdurchsatz bzw. den $NO_x$-Durchsatz unter verschiedenen Betriebsbedingungen in einer Säulendarstellung illustrieren. Die ersten Säulen 44, 45, 46 illustrieren dabei die Ladungswechselverluste, Opazitätsdurchsatz bzw. $NO_x$-Durchsatz in dem Falle, in dem der elektrische Verdichter 13 abgeschaltet ist und die variable Turbinengeometrie des Turboladers 21 so eingestellt ist, dass die Enthalpie des Abgases maximal zur Kompression von Frischluft verwendet wird.

Die Säulen 47, 48, 49 illustrieren die Ladungswechselverluste, während der elektrische Verdichter 13 eine gewisse Zeit aktiv war, die variable Turbinengeometrie auf 95 % Effektivität eingestellt ist, und Säule 50 illustriert die Ladungswechselverluste, wobei eine gegenüber einer Referenz erhöhte Abgasrückführung durchgeführt wurde. Wie aus dem Graphen 38 ersichtlich ist, kann eine Reduktion der Ladungswechselverluste von z.B. 26 % bei erhöhter Abgasrückführung und Betrieb des elektrischen Verdichters 13 für 0,7 Sekunden gegenüber der Situation ohne Verdichter bzw. bei abgeschalteten Verdichter 13 erreicht werden.

Die Säulen 51, 52, 53 des Graphen 40 illustrieren den Opazitätsdurchsatz für verschiedene Anschaltdauern des Verdichters 13, wobei die Säule 54 den Opazitätsdurchsatz bei erhöhter Abgasrückführungsrate darstellt. Wie aus dem Graphen 40 der Fig. 3 ersichtlich ist, kann eine Reduktion des Opazitätsdurchsatzes um 6 % erreicht werden, wenn sowohl der elektrische Verdichter 13 eingesetzt wird als auch eine erhöhte Abgasrückführung durchgeführt wird.

Die Säulen 55, 56, 57 des Graphen 42 illustrieren den $NO_x$-Durchsatz für verschiedene Anschaltzeiten des Verdichters 13, wobei der in der letzten Säule 58 angezeigte $NO_x$-Durchsatz ferner bei erhöhter Abgasrückführung ermittelt wurde. Wie aus dem Graphen 42 der Fig. 3 ersichtlich ist, kann durch Verdichtung des dem Verbrennungsraum der Verbrennungskraftmaschine 3 zugeführten Gases und durch Erhöhung der Abgasrückführung eine 50 prozentige Reduktion der $NO_x$-Emissionen erreicht werden.

Aus den Graphen der Fig. 3 geht unter anderem hervor, dass Ladungswechselverluste und Ruß mittels eines elektrischen Verdichters in der Dynamik reduziert werden können. Wird die Abgasrückführungsrate gleich belassen (gegenüber der Abgasrückführungsreferenz) steigen jedoch die $NO_x$-Emissionen. Daher wird eine Erhöhung der Abgasrückführungsrate in der Dynamik, das heißt bei Lastwechsel vorgeschlagen. Im Fall eines exemplarischen Drehmomentsprunges können die Ladungswechselverluste bei gleichzeitiger Partikelreduktion reduziert werden. Durch die erhöhte Abgasrückführung können zusätzlich die Stickoxide in der Dynamik verringert werden (Ruß-$NO_x$-Kompromiss). Durch einen zusätzlichen elektrischen Verdichter kann ein besserer Füllungs-/Ladedruckaufbau erreicht werden. Dadurch kann schneller eine bestimmte Einspritzmenge in die Verbrennungskammern der Verbrennungskraftmaschine eingebracht werden, wodurch ein besseres Ansprechverhalten der Verbrennungskraftmaschine erreicht sein kann. Die gezielte Aufgabe eines verbesserten Ansprechverhaltens der Verbrennungskraftmaschine für eine Reduzierung der Stickoxidemissionen kann durch eine Abgasrückführungsrateerhöhung erreicht werden. Die Entscheidung bzw. Wahl, inwieweit die Abgasrückführungsrate erhöht werden soll, kann z. B. auf Basis eines Wichtungsfaktors "Ansprechverhalten zu Stickoxidrohemissionen" fallen.

Für die Abgasrückführungsrate können Sollwerte bzw. Referenzwerte für den stationären Betrieb existieren und z.B. in einem Speicher des Motorsteuergerätes 5 abgelegt sein. Dabei kann ein Stationärbetrieb als ein solcher betrachtet werden, in dem ein angefordertes Solldrehmoment über die Zeit konstant bzw. im Wesentlichen konstant bleibt. Eine gezielte Wahl der Abgasrückführungsrate kann auf Basis von für einen angeforderten Beschleunigungsvorgang geschätzten Stickoxidemissionen und der Fahrzeugbeschleunigung getroffen werden.

Durch Abgasmessungen am Fahrzeug unter Beobachtung von elektrischen Verdichtern und HD-/ND-Abgasreduktionsklappen kann eine Erhöhung der Abgasreduktionsrate und eine Erhöhung einer Verdichterleistung eines elektrischen Verdichters nachgewiesen werden.

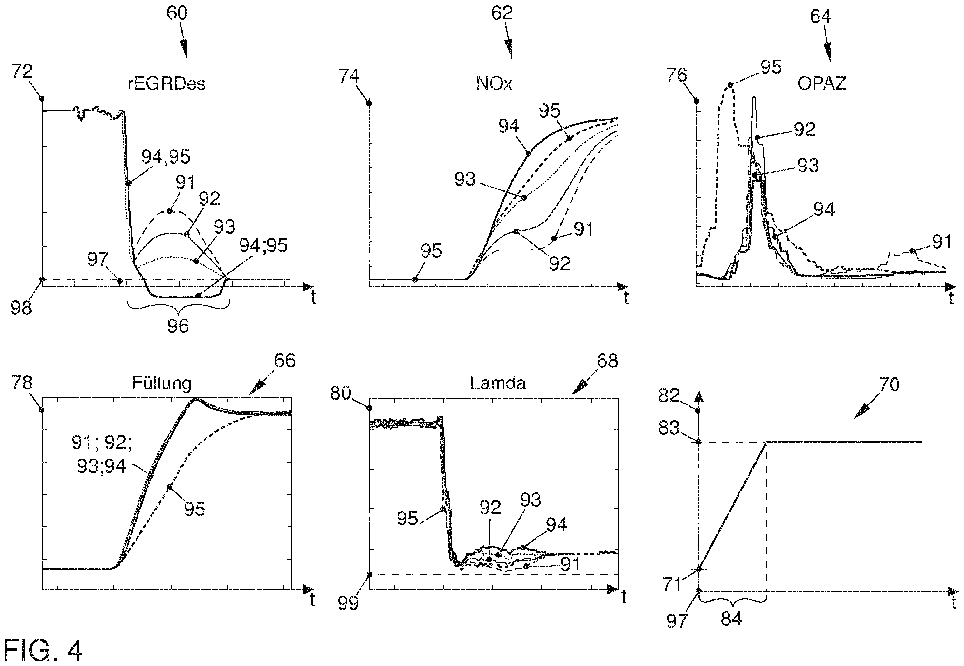

Fig. 4 illustriert Graphen 60, 62, 64, 66, 68, 70, wobei auf einer Abszisse die Zeit und auf einer Ordinate in Graph 60 die Abgasreduktionsrate 72, in Graph 62 die $NO_x$-Emission 74, in Graph 64 der Opazitätsdurchsatz 76, in Graph 66 die Brennkammerfüllung 78, in Graph 68 der Lambda-Wert 80 und in Graph 70 das angeforderte Solldrehmoment 82 in willkürlichen Einheiten aufgetragen sind.

Zum Zeitpunkt 290 (Bezugszeichen 97) erfolgt eine Erhöhung des Solldrehmoments von einem niedrigen Solldrehmoment 71 auf ein erhöhtes Drehmoment 83. Die Erhöhung erfolgt in einem Zeitintervall 84, das z. B. zwischen 0,1 Sekunde und 5 Sekunden liegen kann. Die Kurven 91, 92, 93, 94 in den Graphen 60, 62, 64, 66, 68 stellen dabei die jeweiligen Werte für eine maximale Abgasrückführung, für eine mittlere Abgasrückführung, für eine geringe Abgasrückführung, für keine Abgasrückführung dar, wobei der elektrische Verdichter 13 in allen Fällen zur Verdichtung des Gases eingeschaltet ist. Die Kurven 95 illustrieren dabei die jeweiligen Werte in den Graphen 60, 62, 64, 66, 68, wobei weder eine erhöhte Abgasrückführung durchgeführt wird noch eine Erhöhung der Dichte des den Verbrennungsräumen zugeführten Gases (durch den elektrischen Verdichter bzw. durch die elektrische Unterstützung des elektrisch unterstützten Abgasturboladers) durchgeführt wird. Die Kurven 95 können somit als Kurven angesehen werden, welche im herkömmlichen Verfahren beobachtet werden.

Wie aus dem Graphen 66 ersichtlich ist, ist die Füllung auf Kurven 91 bis 94 bei eingeschaltetem elektrischen Verdichter 13 höher als bei nicht vorhandenem oder ausgeschaltetem Verdichter 13 (siehe Kurve 95 in dem Graphen 66). Wie in dem Graphen 60 der Fig. 4 dargestellt ist, wird die Abgasrückführungsrate während eines Zeitintervalls 96 zwischen dem Beginn 97 des Erhöhens auf das Solldrehmoment 83 und nach dem Erhöhen des Solldrehmoments erhöht gegenüber einer Referenzabgasrückführungsrate 98. Die Kurven 91, 92 und 93 weisen einen zeitlichen Verlauf auf, wobei die Abgasrückführungsrate zunächst ansteigt, ein Maximum erreicht und dann auf den Referenzwert 98 abfällt.

Die nach herkömmlichem Verfahren erhaltenen Kurven 94, 95 senken die Abgasrückführung in dem Zeitintervall 96 auf Null ab und erhöhen erst nach Beendigung des Zeitintervalls 96 die Abgasrückführungsrate auf den Referenzwert 98. Im Gegensatz zu den herkömmlichen Verfahren wird die Abgasrückführungsrate in dem Zeitintervall 96 nach Erhöhen des angeforderten Solldrehmoments auf die gegenüber der Referenzabgasrückführungsrate 98 erhöhten Abgasrückführungsraten 91, 92 bzw. 93 erhöht und erst nach Ablauf des Zeitintervalls 96 auf die Referenzabgasrückführungsrate 98 zurückgeregelt.

Die Abgasrückführungsrate 91 ist derart gewählt, dass die insgesamt zurückgeführte Abgasmenge dem Füllungsanteil entspricht bzw. gleicht, welcher aufgrund der höheren Dichte des Gases den Verbrennungsräumen zusätzlich zugeführt wird. Insbesondere kann die Abgasrückführungsrate gemäß der Kurve 91 durch Differenzbildung der Kurven 91 und 95 des Graphen 66 und geeignete Skalierung erhalten werden. Die Abgasrückführungsraten 92 und 93 illustrieren Steuerungen, in welchen nur ein Teil der zusätzlich aufgrund der Verdichtung in die Verbrennungskammern zugeführten Luft nach Verbrennung als Abgas rückgeführt wird.

Wie aus dem Graph 62 ersichtlich ist, kann durch maximale Erhöhung der Abgasrückführungsrate (Kurve 91 in Graph 62) die Stickoxidemission maximal reduziert werden, insbesondere gegenüber dem herkömmlichen Verfahren (Kurven 94, 95) reduziert werden. Wie aus dem Graphen 64 ersichtlich ist, kann eine maximale Abgasrückführung (Kurve 91) zu einer Erhöhung der Opazität führen. Daher kann ein Kompromiss zwischen Reduktion der Stickoxidemission und Reduktion der Partikelemission durch Rückführung der Abgasrückführung unterhalb (d.h. Kurven 92, 93) der maximal erhöhten Abgasrückführung (Kurve 91) gewählt wird. Ferner kann die Wahl der Größe der erhöhten Abgasrückführungsrate so gewählt werden, dass ein minimaler Lambda-Wert z.B. ein Referenz-Lambda-Wert 99, wie er in dem Graphen 68 der Fig. 4 illustriert ist, nicht unterschritten wird.

**Bezugszeichenliste**

| | |
|---|---|
| 1 | Teil eines Fahrzeugs |
| 3 | Verbrennungskraftmaschine |
| 4 | durch Turbolader verdichtetes Gas |
| 5 | Motorsteuergerät |
| 6 | Zylinderblock |
| 7 | Zylinder |
| 8 | ND-Abgasrückführungsventil |
| 9 | Gas |
| 10 | Verdichter |
| 11 | Frischluft |
| 12 | elektrische Maschine |
| 13 | elektrisch angetriebener Verdichter |
| 14 | Steuersignal |
| 15 | elektrischer Verdichter (Schaufelrad) |
| 16 | Steuersignal |
| 17 | Steuersignal |
| 18 | Abgasturbine |
| 19 | Abgas |
| 20 | HD-Abgasrückführungsventil |
| 21 | (elektrisch unterstützter) Turbolader |
| 22 | Steuersignal |
| 23 | rückgeführtes Abgas |
| 25 | Detektionssignal |
| 28 | Verfahren |
| 29 | Abgasnachbehandlung |
| 30 | Verfahrensschritt |

| | |
|---|---|
| 32 | Verfahrensschritt |
| 34 | Verfahrensschritt |
| 36 | Verfahrensschritt |
| 38 | Graph |
| 40 | Graph |
| 42 | Graph |
| 44 | Säule |
| 45 | Säule |
| 46 | Säule |
| 47-58 | Säulen |
| 60 | Graph |
| 62 | Graph |
| 64 | Graph |
| 66 | Graph |
| 68 | Graph |
| 70 | Graph |
| 71 | niedriges Solldrehmoment |
| 72 | Ordinate |
| 74 | Ordinate |
| 76 | Ordinate |
| 78 | Ordinate |
| 80 | Ordinate |
| 82 | Ordinate |
| 83 | erhöhtes Solldrehmoment |
| 84 | Zeitraum |
| 91 | Kurve erhalten gemäß Ausführungsform der Erfindung |
| 92 | Kurve erhalten gemäß Ausführungsform der Erfindung |
| 93 | Kurve erhalten gemäß Ausführungsform der Erfindung |
| 94 | Kurve konventionell erhaltener Werte |
| 95 | Kurve konventionell erhaltener Werte |
| 96 | Zeitintervall |
| 97 | Beginn des Erhöhens des Solldrehmoments |
| 98 | Abgasrückführungsreferenz |
| 99 | Referenz-Lambda-Wert |

**Patentansprüche**

1. Verfahren zum Steuern einer Verbrennungskraftmaschine (3), wobei das Verfahren aufweist:

Detektieren (30, 25) eines Erhöhens eines von der Verbrennungskraftmaschine bereitzustellenden Solldrehmomentes (82) auf ein erhöhtes Solldrehmoment (83);
Erhöhen (32, 14, 16) einer Dichte von Gas (11, 15, 23) auf eine erhöhte Dichte mit einem zugeschalteten elektrischen Verdichter (15);

Zuführen (34) des Gases (9) der erhöhten Dichte in einen Verbrennungsraum der Verbrennungskraftmaschine (3); und
Rückführen (36) von aus dem Verbrennungsraum ausgegebenem Abgas (19, 15) in den Verbrennungsraum mit einer gegenüber einer Referenzrate (98), die im stationären Betrieb bei dem erhöhtem Solldrehmoment angewendet wird, erhöhten Abgasrückführungsrate (91, 92, 93), wobei das Erhöhen der Dichte des Gases (11, 15, 23) und das Rückführen des Abgases (19, 15) mit der erhöhten Abgasrückführungsrate während eines Zeitintervalls (96) zwischen Beginn (97) des Erhöhens auf das erhöhte Solldrehmoment (83) von einem niedrigen Solldrehmoment (71) und nach Ende des Erhöhens des Solldrehmomentes durchgeführt wird, wobei das Zeitintervall zwischen 0,1 s und 5 s beträgt, wobei

die Abgasrückführungsrate durch einen Zeitverlauf (91, 92, 93) während des Zeitintervalls (96) gekennzeichnet ist, wobei die Abgasrückführungsrate zunächst ansteigt, ein Maximum erreicht und danach auf die Referenzrate (98) abfällt, und wobei die Abgasrückführungsrate (72; 91, 92, 93) zeitlich synchron zu einer Füllungsmenge (78; 91, 92, 93) des in den Verbrennungsraum zugeführten Gases (9) geführt wird.

2. Verfahren gemäß Anspruch 1, wobei nach dem Zeitintervall (98) das Erhöhen der Dichte des Gases mit dem zugeschalteten elektrischen Verdichter (15) beendet wird.

3. Verfahren gemäß einem der vorangehenden Ansprüche, wobei die erhöhte Abgasrückführungsrate (72; 91, 92, 93) so gewählt ist, dass die rückgeführte Abgasmenge einem Füllungsanteil des in den Verbrennungsraum zugeführten Gases entspricht, welcher Füllungsanteil aufgrund der erhöhten Dichte des Gases in dem Verbrennungsraum erzeugt ist, wobei der Füllungsanteil zwischen 30% und 100% liegt.

4. Verfahren gemäß einem der vorangehenden Ansprüche, wobei die erhöhte Abgasrückführungsrate (72; 91, 92, 93) so gewählt ist, dass ein Lambda-Wert (80) nicht unterhalb eines Referenz-Lambda-Wertes (99) fällt.

5. Verfahren gemäß einem der vorangehenden Ansprüche, wobei das Erhöhen der Dichte des Gases mittels eines elektrisch unterstützten Turboladers (21) der Verbrennungskraftmaschine (3), dem Abgas (19) zugeführt wird, und/oder mittels eines elektrischen Verdichters (13) der Verbrennungskraftmaschine (3) durchgeführt wird, dem Frischluft (11) oder ein Gemisch aus Frischluft (11) und Abgas (15) zugeführt wird.

6. Verfahren gemäß einem der vorangehenden Ansprüche, ferner aufweisend:

Zuführen von aus dem Verbrennungsraum ausgegebenem Abgas (19) in einen Turbolader (21) der Verbrennungskraftmaschine (3); Verändern einer Turbolader-Turbinengeometrie des Turboladers (21) derart, dass nach dem Erhöhen des Solldrehmomentes mehr Enthalpie-Abgabe des Abgases (19) an eine Turbine des Turboladers (21) erfolgt als vor Erhöhen des Solldrehmomentes.

7. Motorsteuergerät (5) zum Steuern einer Verbrennungskraftmaschine (3), welches ausgebildet ist, ein Verfahren gemäß einem der vorangehenden Ansprüche auszuführen.

## Claims

1. Method for controlling an internal combustion engine (3), wherein the method comprises:

detecting (30, 25) an increase of a setpoint torque (82), which is to be provided by the internal combustion engine, to an increased setpoint torque (83); increasing (32, 14, 16) a density of gas (11, 15, 23) to an increased density by means of an activated electrical compressor (15); feeding (34) the gas (9) of increased density into a combustion chamber of the internal combustion engine (3); and recirculating (36) exhaust gas (19, 15) discharged from the combustion chamber into the combustion chamber at an exhaust-gas recirculation rate (91, 92, 93) which is increased in relation to a reference rate (98) used in the presence of the increased setpoint torque in steady-state operation, wherein the increase of the density of the gas (11, 15, 23) and the recirculation of the exhaust gas (19, 15) at the increased exhaust-gas recirculation rate is performed during a time interval (96) between a start (97) of the increase to the increased setpoint torque (83) from a low setpoint torque (71) and after the end of the increase of the setpoint torque, wherein the time interval amounts to between 0.1 s and 5 s, wherein the exhaust-gas recirculation rate is **characterized by** a time profile (91, 92, 93) during the time interval (96), wherein the exhaust-gas recirculation rate firstly increases, reaches a maximum and subsequently falls to the reference rate (98), and wherein the exhaust-gas recirculation rate (72; 91, 92, 93) is adjusted synchronously in terms of time with respect to a charge quantity (78; 91, 92, 93) of the gas (9) fed into the combustion chamber.

**2.** Method according to Claim 1, wherein, after the time interval (98), the increase of the density of the gas by means of the activated electrical compressor (15) is ended.

**3.** Method according to one of the preceding claims, wherein the increased exhaust-gas recirculation rate (72; 91, 92, 93) is selected such that the recirculated exhaust-gas quantity corresponds to a charge fraction of the gas fed into the combustion chamber, which charge fraction is generated owing to the increased density of the gas in the combustion chamber, wherein the charge fraction lies between 30% and 100%.

**4.** Method according to one of the preceding claims, wherein the increased exhaust-gas recirculation rate (72; 91, 92, 93) is selected such that a lambda value (80) does not fall below a reference lambda value (99).

**5.** Method according to one of the preceding claims, wherein the increase of the density of the gas is performed by means of an electrically assisted turbocharger (21) of the internal combustion engine (3), to which exhaust gas (19) is fed, and/or by means of an electrical compressor (13) of the internal combustion engine (3), to which fresh air (11) or a mixture of fresh air (11) and exhaust gas (15) is fed.

**6.** Method according to one of the preceding claims, furthermore comprising:

feeding exhaust gas (19) discharged from the combustion chamber into a turbocharger (21) of the internal combustion engine (3); varying a turbocharger turbine geometry of the turbocharger (21) such that a greater amount of enthalpy of the exhaust gas (19) is released to a turbine of the turbocharger (21) after the increase of the setpoint torque than before the increase of the setpoint torque.

**7.** Engine control unit (5) for controlling an internal combustion engine (3), which engine control unit is designed to carry out a method according to one of the preceding claims.

**Revendications**

**1.** Procédé de commande d'un moteur à combustion interne (3), le procédé comprenant :

détection (30, 25) d'une augmentation d'un couple de consigne (82) à délivrer par le moteur à combustion interne à un couple de consigne augmenté (83) ;
augmentation (32, 14, 16) d'une densité de gaz (11, 15, 23) à une densité augmentée avec un compresseur (15) électrique mis en circuit ;
acheminement (34) du gaz (9) ayant la densité augmentée dans une chambre de combustion du moteur à combustion interne (3) ; et recirculation (36) des gaz d'échappement (19, 15) émis depuis la chambre de combustion dans la chambre de combustion avec un taux de recirculation des gaz d'échappement (91, 92, 93) augmenté par rapport à un taux de référence (98) qui est utilisé en régime stationnaire avec le couple de consigne augmenté,
l'augmentation de la densité du gaz (11, 15, 23) et la recirculation des gaz d'échappement (19, 15) avec le taux de recirculation des gaz d'échappement augmenté étant effectuées pendant un intervalle de temps (96) entre le début (97) de l'augmentation au couple de consigne augmenté (83) depuis un couple de consigne faible (71) et après la fin de l'augmentation du couple de consigne, l'intervalle de temps étant compris entre 0,1 s et 5 s, le taux de recirculation des gaz d'échappement étant **caractérisé par** un cours du temps (91, 92, 93) pendant l'intervalle de temps (96), le taux de recirculation des gaz d'échappement croissant tout d'abord, atteignant un maximum et chutant ensuite au taux de référence (98), et le taux de recirculation des gaz d'échappement (72 ; 91, 92, 93) étant asservi avec synchronisation dans le temps sur une quantité de remplissage (78 ; 91, 92, 93) du gaz (9) acheminé dans la chambre de combustion.

**2.** Procédé selon la revendication 1, l'augmentation de la densité du gaz avec le compresseur (15) électrique mis en circuit prenant fin après l'intervalle de temps (98) .

**3.** Procédé selon l'une des revendications précédentes, le taux de recirculation des gaz d'échappement (72 ; 91, 92, 93) augmenté étant choisi de telle sorte que la quantité de gaz d'échappement recirculée correspond à une part de remplissage du gaz acheminé dans la chambre de combustion, laquelle part de remplissage est générée en raison de la densité augmentée du gaz dans la chambre de combustion, la part de remplissage étant comprise entre 30 % et 100 %.

**4.** Procédé selon l'une des revendications précédentes, le taux de recirculation des gaz d'échappement (72 ; 91, 92, 93) augmenté étant choisi de telle sorte qu'une valeur Lambda (80) ne chute pas au-dessous d'une valeur Lambda de référence (99).

**5.** Procédé selon l'une des revendications précédentes, l'augmentation de la densité du gaz étant effectuée au moyen d'un turbocompresseur (21) à assistance électrique du moteur à combustion interne (3), auquel sont acheminés des gaz d'échappement (19), et/ou au moyen d'un compresseur (13) électrique du moteur à combustion interne (3), auquel est acheminé de l'air frais (11) ou un mélange d'air frais (11) et de gaz d'échappement (15).

**6.** Procédé selon l'une des revendications précédentes, comprenant en outre :

acheminement des gaz d'échappement (19) émis depuis la chambre de combustion dans un turbocompresseur (21) du moteur à combustion interne (3) ;
modification d'une géométrie de turbine de turbocompresseur du turbocompresseur (21) de telle sorte qu'après l'augmentation du couple de consigne, la restitution d'enthalpie des gaz d'échappement (19) à une turbine du turbocompresseur (21) est plus élevée qu'avant l'augmentation du couple de consigne.

**7.** Contrôleur de moteur (5) destiné à commander un moteur à combustion interne (3), qui est configuré pour mettre en oeuvre un procédé selon l'une des revendications précédentes.

FIG. 1

FIG. 2

FIG. 3

FIG. 4

**EP 3 121 408 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009032659 A1
- DE 102012222107 A1
- US 2015176536 A1